(19) **Europäisches Patentamt**
**European Patent Office**
**Office européen des brevets**

(11) **EP 4 204 373 B1**

(12) **FASCICULE DE BREVET EUROPÉEN**

(45) Date de publication et mention
de la délivrance du brevet:
**03.01.2024 Bulletin 2024/01**

(21) Numéro de dépôt: **22805827.7**

(22) Date de dépôt: **18.10.2022**

(51) Classification Internationale des Brevets (IPC):
**C03C 8/20** (2006.01)     **C03C 8/00** (2006.01)
**C03C 3/093** (2006.01)    **C03C 8/02** (2006.01)
**C03C 8/16** (2006.01)     **C03C 17/04** (2006.01)

(52) Classification Coopérative des Brevets (CPC):
**C03C 8/20; C03C 3/093; C03C 8/02; C03C 8/16;**
**C03C 17/04;** C03C 2204/08; C03C 2217/78

(86) Numéro de dépôt international:
**PCT/EP2022/078994**

(87) Numéro de publication internationale:
**WO 2023/066945 (27.04.2023 Gazette 2023/17)**

(54) **SUBSTRAT MINÉRAL ÉMAILLÉ ET MÉTHODE DE FABRICATION D'UN TEL SUBSTRAT**

EMAILLIERTES MINERALISCHES SUBSTRAT UND VERFAHREN ZU SEINER HERSTELLUNG

ENAMELLED MINERAL SUBSTRATE AND METHOD FOR MAKING SAME

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **19.10.2021 FR 2111100**

(43) Date de publication de la demande:
**05.07.2023 Bulletin 2023/27**

(73) Titulaire: **Eurokera S.N.C.**
**02400 Chateau-Thierry (FR)**

(72) Inventeurs:
• **SEME, Charlène**
**02400 CHERRY (FR)**
• **DELAYE, Loïc**
**02130 FERE-EN-TARDENOIS (FR)**

(74) Mandataire: **Saint-Gobain Recherche**
**B.P. 135**
**39, quai Lucien Lefranc**
**93303 Aubervilliers Cedex (FR)**

(56) Documents cités:
EP-A1- 3 067 333     FR-A1- 2 858 974
US-A1- 2016 264 455   US-A1- 2021 115 281
US-B2- 9 701 576

## Description

### Domaine technique

La présente invention concerne un substrat minéral comprenant, sur au moins une de ses surfaces, un émail inorganique résistant aux frottements métalliques. Elle a également pour objet une méthode de fabrication d'un tel substrat.

### Arrière-plan technique

Les substrats minéraux tels que les vitrocéramiques ou les verres spéciaux colorés sont appréciés dans de nombreux domaines pour leurs qualités esthétiques et leurs propriétés physico-chimiques, notamment leur faible coefficient de dilatation thermique et leur résistance aux chocs thermiques.

Ils sont particulièrement utilisés dans les équipements de cuisine, notamment sous la forme d'un substrat plan, par exemple comme surface de cuisson dans les dispositifs de cuisson, paroi vitrée de four, et surface de travail dans les plans, tables ou meubles de travail pour la préparation de produits alimentaires.

A titre d'exemples, dans les équipements de cuisine, les vitrocéramiques, matériaux composites comprenant une phase amorphe dans laquelle sont dispersées des phases cristallines, sont des substrats minéraux très appréciés en raison de leur très bonne résistance aux chocs thermiques, leur très faible coefficient de dilatation et leur résistance mécanique. Utilisées comme surface de cuisson et/ou plan de travail dans les dispositifs de cuisson, elles sont généralement à base d'aluminosilicate de lithium avec une dispersion de phases cristallines à base β-quartz et/ou de β-spodumène dans leur matrice amorphe.

Selon l'utilisation recherchée pour les équipements de cuisine, les substrats minéraux peuvent être associés à des dispositifs électriques et/ou électroniques tels que des moyens de chauffage et/ou d'éclairage, et/ou être munis d'un certain nombre d'accessoires, tels que commandes, capteurs et afficheurs, qui permettent une interaction entre l'utilisateur et les dispositifs dans lesquels ces substrats sont incorporés.

Il est courant de procéder à un émaillage de la surface des substrats minéraux à des fins de décoration et/ou de délimitation de certaines zones fonctionnelles tels que les zones de commande, de signalisation et/ou de chauffe pour les dispositifs de cuisson. L'émaillage est communément réalisé à l'aide de méthodes sérigraphiques ou d'impression par jet d'encre.

Dans le domaine des substrats minéraux utilisés dans et/ou à proximité des dispositifs de cuisson, pour des raisons de durabilité et d'esthétisme, un émail présente préférentiellement une adhésion correcte au substrat sur lequel il est déposé ainsi qu'une résistance appréciable aux sollicitations mécaniques et/ou chimiques qu'il est susceptible de subir dans les conditions d'utilisation des dispositifs de cuisson.

En particulier, sont généralement recherchés des émaux capables de résister aux expositions répétées aux produits alimentaires et/ou chimiques ainsi qu'aux sollicitations mécaniques telles que les frottements métalliques provoqués par les déplacements répétés des ustensiles de cuisine tels que casseroles ou poêles.

L'état de la technique fournit de nombreux exemples de compositions d'émaux, d'encres minérales et/ou de pâtes minérales ainsi que des exemples de méthodes d'émaillage adaptées.

FR 2 858 974 A1 [SCHOTT AG [DE]] 25.02.2005 décrit une surface de cuisson en vitrocéramique dotée d'un décor simili-noir intensément colorée et peu rugueuse.

WO 2016/008848 A1 [SCHOTT AG [DE]] 21.01.2016 décrit une encre minérale adaptée à impression de décors sur substrat vitrocéramique à faible coefficient d'expansion. Cette encre minérale permet d'obtenir des émaux présentant une meilleure résistance à la flexion et à l'écaillage.

WO 2016/110724 A1 [FENZI SPA [IT]] 14.07.2016 décrit une composition d'encre minérale pour impression de décors sur substrat vitrocéramique. Cette encre minérale permet d'obtenir des émaux chimiquement résistants aux acides, aux bases et aux rayonnements, et mécaniquement résistants à l'abrasion et à la délamination.

EP 3 067 334 A1 [SCHOTT AG [DE]] 14.09.2016 décrit un émail de décoration pour substrat vitrocéramique permettant de réduire le bruit généré par le déplacement des ustensiles de cuisine sur la surface de l'émail.

WO 2019/219691 A1 [EUROKERA [FR]] 21.11.2019 décrit une encre minérale pour impression de décors substrat vitrocéramique. Cette encre permet d'obtenir des émaux résistants aux produits alimentaires, aux détergents, aux effets conjugués des expositions répétées à ces produits et des cycles de chauffage, et aux températures supérieures à 800°C utilisées lors de la fabrication des substrats vitrocéramiques.

# EP 4 204 373 B1

## Résumé de l'invention

### Problème technique

Les frottements métalliques liés aux déplacements répétés des ustensiles de cuisine tels que casseroles ou poêles sur la surface des substrats minéraux dans et/ou à proximité des dispositifs de cuisson provoquent l'apparition de marques ou traces métalliques sur les émaux de décoration. Ces marques ou traces métalliques sont généralement des particules métalliques qui, sous l'effet des frottements répétés des ustensiles métalliques sur les émaux, ont été arrachées auxdits ustensiles métalliques, et se sont incrustées sur la surface du substrat ou des émaux. Ce phénomène est particulièrement marqué pour les ustensiles à base de métal clair et tendre tels que les casseroles ou poêles à fond en aluminium ou en acier inoxydable.

Avec le temps, ces particules incrustées finissent par dégrader l'apparence esthétique des émaux, notamment les émaux présentant un faible niveau de contraste avec le substrat minéral, tel que les émaux de couleur sombre ou noir sur un substrat minéral sombre ou noir. Sur le long terme, une telle dégradation esthétique est préjudiciable à une perception positive du produit par les clients.

D'autre part, avec le développement des surfaces de cuisson dites « flexibles », c'est-à-dire les surfaces sur lesquelles les ustensiles de cuisson peuvent être placés librement pour leur chauffage, ou autrement dit, sur lesquelles il n'existe pas de zones dédiées de chauffe, les ustensiles sont déplacés plus fréquemment sur la surface de cuisson. La dégradation esthétique provoquée par les frottements métalliques devient alors d'autant plus marquée ou plus rapide.

Enfin, l'accumulation de particules métalliques incrustées, lorsqu'elle devient particulièrement visible, entraîne des nettoyages plus fréquents et plus vigoureux de la surface du substrat vitrocéramique et des émaux par les utilisateurs. Ces nettoyages ont généralement pour objectif de faire disparaître les marques et traces métalliques visibles. Cependant, la fréquence et la vigueur de ces nettoyages ont pour conséquence négative de provoquer des endommagements précoces et importants des émaux. Ces endommagements dégradent, à leur tour, l'apparence esthétique des émaux de décoration et réduisant la durabilité des surfaces de cuisson.

Il est donc un besoin de substrat vitrocéramique comprenant un émail de décoration capable de limiter l'apparition des marques ou traces métalliques.

### Solution au problème technique

Selon un premier aspect de l'invention, il est fourni un substrat minéral (1001) selon la revendication 1, les revendications dépendantes étant des modes avantageux de réalisation..

Selon un deuxième aspect de l'invention, il est fourni une méthode de fabrication d'un substrat selon le premier aspect de l'invention.

### Avantages de l'invention

Un avantage remarquable de l'invention est une nette réduction du nombre de marques et traces métalliques visibles sous l'effet des frottements répétés des ustensiles métalliques sur l'émail ou les émaux. Cette réduction peut atteindre 50%, voire 70% ou davantage, comparée à un substrat vitrocéramique comprenant un émail standard.

Un deuxième avantage est que la réduction du nombre de marques ou traces métalliques visibles est notamment constatée pour les ustensiles à base des métaux usuels les plus clairs tels que l'aluminium ou l'inox.

Un troisième avantage est que la réduction du nombre de marques et traces métalliques visibles est particulièrement notable pour les émaux de décoration présentant un faible niveau de contraste avec le substrat minéral, tel que les émaux de couleur sombre ou noire sur un substrat minéral de couleur sombre ou noire.

Un quatrième avantage est la facilité de mise en oeuvre de l'invention avec la possibilité de l'appliquer à toute composition chimique d'émail.

### Brève description des dessins

[Fig.1] est une représentation schématique orthographique d'un substrat minéral comprenant un émail.

[Fig.2] est une représentation schématique de la section d'un substrat minéral comprenant un émail.

[Fig.3] est un exemple de profil de surface d'un émail inorganique sur substrat minéral conformément à l'invention.

[Fig.4] est une représentation schématique d'un exemple de motif formé par un émail inorganique au sens de l'invention.

[Fig.5] est un premier exemple de représentation 3D de profils topographiques sur des exemples conformément à l'invention.

[Fig.6] est un deuxième exemple de représentation 3D de profils topographiques sur des exemples conformément à l'invention.

[Fig.7] est une représentation graphique de la rugosité totale en fonction de la pente topographique pour des exemples selon l'invention et des contre-exemples.

## Description détaillée de modes de réalisation

Au sens de l'invention, par « émail », il est entendu un matériau vitreux ou composite comprenant généralement une fritte de verre recuite dans laquelle peuvent être éventuellement dispersés des charges, des agents et/ou des pigments colorants et/ ou structurants.

Au sens de l'invention, il est entendu par « motif », pour une surface donnée du substrat minéral couverte par ledit motif, une trame décorative discontinue présentant un taux de recouvrement de ladite surface strictement inférieur à 100%, de préférence inférieure 90%.

Au sens de l'invention, par « taux de recouvrement » d'un émail formant motif sur une surface donnée du substrat minéral, il est entendu la proportion de ladite surface donnée qui est recouverte par ledit motif. En d'autres termes, il correspond au rapport, exprimé en pourcentage, de la surface couverte par le motif sur ladite surface donnée.

Selon ces deux dernières définitions, un 'aplat' qui est constitué par une trame uniforme, c'est-à-dire continue, et, pour une surface donnée du substrat minéral, possède un taux de recouvrement de 100% de ladite surface, n'est pas un motif.

Au sens de l'invention, par « taux d'encrage » (« ink coverage » en anglais), il est entendu le taux d'encrage tel que connu et défini dans le domaine de l'impression par jet d'encre. Pour une encre unitaire donnée, il correspond au nombre de pixels réellement imprimés sur le nombre total de pixels imprimables. Dans le cas d'une impression jet d'encre, il peut dépendre de la résolution du dispositif d'impression utilisé.

Au sens de l'invention, par « pente topographique », il est entendu la mesure courante de la déclivité, définie comme la tangente de l'inclinaison entre deux points d'une surface situés à des altitudes différentes, ou encore comme la tangente de l'angle de déclivité par rapport à un niveau de référence, généralement l'horizontale. Cette mesure est généralement exprimée en pourcentage.

Au sens de l'invention, par « rugosité totale », il est entendu la rugosité totale, notée Rt, telle que définie à la section 4.1.5 de la norme ISO 4287:1997. Elle est définie comme la somme de la plus grande des hauteurs de saillie, Zp, d'un profil de surface et la plus grande des profondeurs, Zv, du profile sur la longueur d'évaluation du profil.

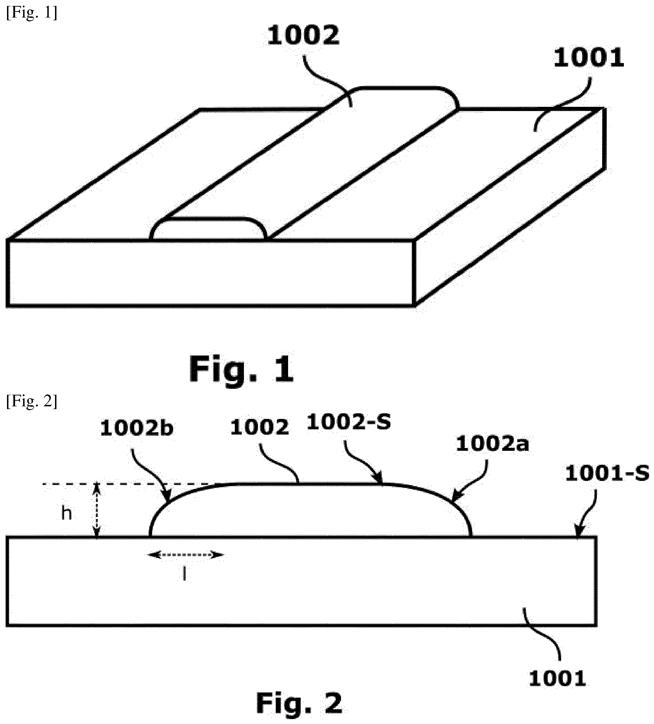

Comme exemple illustratif, en référence à la [Fig.1], un substrat minéral 1001 tel que ceux utilisés comme surface de dispositifs de cuisson comprend le substrat minéral 1001 lui-même muni sur au moins une de ses surfaces d'un émail inorganique 1002. Sur la [Fig.1], l'émail 1002 est représenté sous la forme d'une ligne formant une partie d'un motif. Il peut former tout motif adapté.

Un exemple de motif sous la forme d'un motif périodique de carrés d'environ 1,25mm de côté, d'une épaisseur, comprise entre 1 et 3 $\mu$m et espacés de 0,75mm. Le taux de recouvrement de l'émail inorganique sur la surface du substrat est de 40%.

Selon un premier aspect de l'invention, en référence à la [Fig.1] et à la [Fig.2], il est fourni un substrat minéral 1001 formant un motif comprenant sur au moins une de ses surfaces un émail inorganique 1002, caractérisé en ce que :

- l'émail inorganique 1002 présente une valeur de rugosité totale, Rt, de surface 1002-S inférieure ou égale à 2 $\mu$m, et
- le bord 1002a, 1002b de l'émail inorganique 1002 faisant saillie au niveau la surface 1001-S du substrat minéral 1001 présente une valeur de pente topographique, exprimée en pourcentage, inférieure ou égale à 1,4%.

Sans pour autant être une considération théorique ou pratique à laquelle l'invention doit être réduite, une possible explication de l'avantage remarquable que procure l'invention peut être que la synergie, en ce qui concerne l'émail inorganique, entre une rugosité totale de surface inférieure à 2 $\mu$m, et une pente topographique inférieure à 1,4%, permet d'améliorer le glissement des ustensiles métalliques, en particulier en métal tendre, sur la surface dudit email inorganique, et donc réduire le risque d'arrachement de particules métalliques.

Conformément à la définition précédente, la pente topographique correspond à la tangente de la déclivité du bord 1002a, 1002b de l'émail inorganique 1002 formant un motif faisant saillie sur la surface 1001-S du substrat minéral 1001. Autrement dit, en référence à la [Fig.2], elle correspond à la tangente du dénivelé rapporté à la distance dudit dénivelé, c'est-à-dire au rapport, h/l, de la différence d'altitude, h, entre la surface 1001-S du substrat minéral 1001 et la surface1002-S supérieure de l'émail inorganique 1002, sur la distance, 1, entre les deux points considérés pour la différence d'altitude. Exprimé en pourcentage, le rapport h/l est multiplié par 100.

La pente topographique d'un émail organique formant un motif peut être, selon la méthode et les paramètres de son dépôt sur la surface du substrat minéral, varier selon l'épaisseur dudit émail organique, de sa composition chimique et/ou de la taille des particules du mélange, par exemple un mélange fritte de verre minéral et/ou pigment minéral, ayant servi à la former, en particulier de leur combinaison. Toutefois, ces caractéristiques ne sont pas suffisantes à elles seules pour définir une valeur donnée de pente topographique. Autrement dit, deux émaux inorganiques de même composition, ayant été obtenus avec le même mélange et présentant la même épaisseur peuvent avoir des pentes topographiques différentes selon la manière dont ils ont été déposés sur le substrat minéral.

La surface supérieure 1002-S de l'émail inorganique 1002 est généralement la surface la plus étendue et sensiblement parallèle à la surface 1001-S du substrat minéral 1001.

L'angle de déclivité, exprimé en radian, est une expression de la pente topographique sous la forme d'un angle. L'angle de déclivité, $\alpha$, correspond alors par à la valeur obtenue par application au rapport h/l de la fonction réciproque, noté arctan ou tan ', de la fonction tangente, soit.

$$\alpha = \tan^{-1}\left(\frac{h}{l}\right)$$

La multiplication de ce rapport par $180/\pi$ permet la conversion de l'angle en degré.

La valeur de la pente topographique est de préférence la moyenne arithmétique des valeurs des pentes topographiques individuelles mesurées à différents lieux ou différentes localisations du bord 1002a, 1002b de l'émail inorganique 1002 faisant saillie sur la surface 1001-S du substrat minéral 1001.

Un émail formant un motif a généralement pour fonction d'être un revêtement décoratif et/ou fonctionnel déposé à la surface d'un substrat minéral à des fins de décoration, de signalisation et/ou de délimitation, notamment de certaines zones fonctionnelles telles que, par exemple, les zones de chauffe et/ou de commande des dispositifs de cuisson ou des plans de travail.

Différents procédés d'émaillage, également appelé glaçure ou plus simplement décoration, et les compositions des pâtes, encres ou peintures minérales ou céramiques utilisées aux fins desdits procédés d'émaillage sont connus de l'état de la technique, notamment dans le domaine des émaux pour substrats minéraux tels que les vitrocéramiques.

Un émail est généralement obtenu par traitement thermique d'une pâte, d'une encre ou d'une peinture minérale ou céramique déposée sur la surface d'un substrat minéral à l'aide d'une méthode adaptée, par exemple, par sérigraphie ou impression par jet d'encre.

La pâte, l'encre ou la peinture minérale ou céramique comprend une phase solide minérale finement divisée et dispersée dans un médium organique plus ou moins visqueux. Le medium organique permet l'application de la phase solide avec la méthode de dépôt appropriée. Elle possède également une fonction d'agent de suspension et/ou dispersion de la phase minérale afin d'en assurer la répartition homogène et uniforme dans la zone de décoration, de signalisation et/ou de délimitation.

Le substrat minéral 1001 peut être tout substrat minéral susceptible d'être sollicité par des ustensiles métalliques, en particulier un substrat minéral susceptible d'être utilisé dans un environnement dans lequel des ustensiles métalliques de cuisine sont utilisés, par exemple en tant que surface d'un plan de travail et/ou d'un dispositif et/ou d'un meuble de cuisson.

Dans certains modes de réalisation, le substrat minéral 1001 peut être un substrat vitrocéramique ou un substrat en verre minéral. A titre d'exemple, il peut être tout type de vitrocéramique adaptée à une utilisation comme surface d'un plan de travail et/ou d'un dispositif et/ou d'un meuble de cuisson, tels que les vitrocéramiques à base d'aluminosilicate de lithium. Il peut être également tout type de verre minéral, éventuellement trempé, adapté aux mêmes applications, tel que les verres borosilicates ou aluminosilicates.

Conformément à l'invention, la valeur de la rugosité totale de surface de l'émail inorganique 1002 est inférieure ou égale à 2 $\mu$m. Pour certaines compositions d'émail inorganique, des valeurs de rugosité totale plus faibles peuvent être atteintes. Ainsi, dans certains modes avantageux de réalisation, la valeur de ladite rugosité totale de surface peut être inférieure ou égale à 1,5 $\mu$m, de préférence inférieure ou égale à 1 $\mu$m. Il a été constaté qu'une réduction de la rugosité totale de surface peut réduire davantage la visibilité des marques et traces métalliques.

Conformément à l'invention, la valeur de pente topographique du bord 1002a, 1002b de l'émail inorganique 1002 faisant saillie au niveau la surface 1001-S du substrat vitrocéramique 1001 est inférieure ou égale à 1,4%. Pour certaines compositions d'émail inorganique 1002, des valeurs plus faibles peuvent être atteintes. Ainsi, dans certains modes avantageux de réalisation, la valeur de ladite pente topographique peut être inférieure ou égale à 1,2%. Il a été constaté qu'une diminution de la pente topographique peut davantage favoriser le glissement des objets ou ustensiles métalliques sur l'émail inorganique, et donc permettre de réduire plus remarquablement la visibilité des marques et traces métalliques.

Grâce à la réduction de la visibilité des traces et marques métalliques que permet l'invention, l'épaisseur de l'émail inorganique peut être avantageusement réduite puisque la nécessité de compenser d'éventuelles dégradations de l'émail engendrées par l'incrustation des particules métalliques et/ou les nettoyages répétés par les utilisateurs est moins importante, voire inexistante.

Ainsi, dans certains modes de réalisation, l'épaisseur de l'émail inorganique 1002 peut être avantageusement comprise entre 1,5μm et 3,5μm, voire entre 1,5μm et 2 μm.

Les marques et des traces métalliques sont notablement réduites pour un émail inorganique 1002 présentant un faible niveau de contraste avec le substrat minéral 1001, qu'il soit d'aspect sombre, en particulier de couleur noir, ou d'aspect clair, par exemple de couleur blanche. Ainsi, dans un mode particulièrement avantageux de réalisation, la différence relative de luminance ΔL*, définie comme la différence entre la luminance L*(émail/substrat), mesurée en réflexion, de l'émail inorganique 1002 sur le substrat minéral 1001 et de la luminance L*(substrat), mesurée en réflexion, du substrat minéral 1001 dépourvu d'émail inorganique 1002, peut être d'au plus 50, de préférence d'au plus 35. Elle peut notamment être comprise entre 2 et 45, éventuellement entre 5 et 35, ces intervalles de valeurs correspondant à un émail inorganique 1002 d'assez faible contraste par rapport au substrat minéral 1001.

La différence relative de luminance ΔL* peut également être exprimée sous la forme de l'équation suivante :

$$\Delta L^{*} = \left| \left( L^{*}(email\,/\,substrat) - L^{*}(substrat) \right) \right|$$

Par « luminance », il est entendu la luminance, notée L*, telle que définie et mesurée dans la norme ISO11664-4. La luminance du substrat minéral 1001, notée L*(substrat), est mesurée en réflexion. La luminance de l'émail inorganique 1002 déposé sur le substrat minéral 1001, notée L*(email/substrat), est mesurée en réflexion.

Dans les dispositifs de cuisson ou les plans de travail, les substrats minéraux avec lesquels les émaux inorganiques présentent une faible différence de contraste sont généralement des substrats d'aspect sombres, éventuellement de couleur noire, faiblement transmissifs et peu diffusants. Aussi dans certains modes de réalisation, la transmission lumineuse, TI, du substrat minéral 1001 est d'au plus 17%, de préférence d'au plus 10%, voire d'au plus 5%. Les substrats minéraux de couleur noire, tels que les vitrocéramiques noires standards non opalescentes, présentent une transmission lumineuse inférieure à 5%, notamment comprise entre 0,2% et 2%.

Par « transmission lumineuse », il est entendu la transmission lumineuse, notée TI, telle que définie et mesurée dans la section 4.2 de la norme EN 410:1999 avec l'illuminant D65 et un observateur standard.

Dans certains modes particuliers de réalisation, un substrat minéral noir, la luminance L*(substrat), mesurée en réflexion, dudit substrat minéral 1001 peut être en outre inférieure ou égale à 5, de préférence inférieure ou égale à 2. Les substrats minéraux de couleur noire, tels que, par exemple, les vitrocéramiques commercialisées sous le nom KeraBlack® ou KeraBlack+® par la société Eurokera, présentent un tel niveau de luminance.

Un des avantages de l'invention est de favoriser le glissement des ustensiles métalliques, en particulier en métal tendre, sur la surface dudit émail inorganique, et donc réduire le risque d'arrachement de particules métalliques.

Dans des modes avantageux de réalisation, le coefficient de friction, également appelé coefficient de frottement, statique et/ou dynamique de la surface du substrat minéral (1001) munie dudit émail inorganique (1002) est d'au plus 0,30, de préférence d'au plus 0,25. Les substrats minéraux selon l'invention présentent de telles valeurs de coefficient de friction statique et/ou dynamique présentent généralement les meilleurs performances en termes de réduction du nombre de marques et traces métalliques visibles sous l'effet des frottements répétés des ustensiles métalliques.

Par coefficient de friction, il est entendu le coefficient de friction statique et/ou dynamique tels que définis dans les normes ASTM D1894, ISO 8295:1995 et ISO 15359:1999.

Le coefficient de friction statique est défini comme le rapport entre la force de friction statique, c'est-à-dire la force nécessaire pour initier un mouvement de glissement d'une surface sur une autre, sur la force appliquée perpendiculairement à ces deux surfaces pour en maintenir le contact et le glissement.

Le coefficient de friction dynamique est défini comme le rapport entre la force de friction dynamique, c'est-à-dire la force nécessaire pour maintenir un mouvement de glissement d'une surface sur une autre, sur la force appliquée perpendiculairement à ces deux surfaces pour en maintenir le contact et le glissement.

Par coefficient de friction statique et/ou dynamique de la surface du substrat minéral (1001) munie dudit émail inorganique (1002), il est entendu le coefficient de friction statique et/ou dynamique tel qu'il peut être mesuré sur la surface du substrat minéral (1001) sur laquelle est présent l'émail inorganique (1002).

Un substrat minéral 1001 selon l'un des quelconques modes de réalisation décrits peut être avantageusement utilisé comme surface d'un dispositif de cuisson, en particulier d'un dispositif de cuisson de type induction avec une surface dite « flexible », ou d'un plan de travail, en particulier un plan de travail dans un équipement mobilier tel que tables ou meubles de travail pour la préparation de produits alimentaires.

Selon un deuxième aspect de l'invention, il est fourni une méthode de fabrication d'un substrat minéral 1001 selon l'un des quelconques modes de réalisation décrits précédemment, ladite méthode comprenant une étape de dépôt d'un émail inorganique 1002 par impression jet d'encre minérale sur un substrat minéral 1001 dans laquelle le taux d'encrage est d'au moins 45% et d'au plus 85%, et le pourcentage massique de la fraction solide dans l'encre minérale utilisée pour l'impression jet d'encre est d'au plus 40% de ladite encre minérale.

A titre d'exemple illustratif, pour une tache d'impression par jet d'encre à 800 dpi, le nombre de pixels imprimables sur un motif carré d'un pouce carré est de 640 000 pixels. Pour une encre unitaire donnée, si seulement 200 000 pixels sont réellement imprimés, le taux d'encrage, pour cette encre unitaire donnée, est de 200 000/640 000, soit, exprimé en pourcentage, 31,5%.

Si plusieurs encres unitaires sont utilisées, par exemple des encres de couleurs différentes, le taux d'encrage est la somme des taux d'encrage de chacune de ces encres unitaires.

La viscosité de l'encre, typiquement comprise entre 20 et 100 Pa.s, et le volume des gouttes d'encre, typiquement compris entre 12 et 84 pL, peuvent aussi influencer le taux d'encrage. Une encre très fluide et/ou un important volume de goutte peut provoquer une couverture plus importante de la surface imprimée, notamment en couvrant des pixels périphériques à ceux réellement imprimés par le dispositif d'impression par jet d'encre à la résolution choisie. Ces paramètres sont pris généralement pris en compte par le dispositif d'impression jet d'encre lors de la définition du taux d'encrage.

Par « encre minérale », il est entendu une encre minérale adaptée au dépôt d'émaux par impression jet d'encre. Une encre minérale est généralement sous la forme d'une suspension ou d'une dispersion colloïdale d'une phase solide minérale finement divisée dans une phase liquide généralement organique. La phase solide minérale de la suspension colloïdale comprend généralement une fritte de verre et éventuellement un pigment minéral.

L'encre minérale possède une masse volumique, une viscosité et une tension de surface compatibles avec les méthodes d'impression jet d'encre. Les valeurs de ces paramètres dépendent des dispositifs d'impression jet d'encre utilisés et conditionnent la qualité des motifs décoratifs obtenus.

La dimension des grains constituant la phase solide minérale est généralement micrométrique, voire sous-micrométrique. La phase liquide comprend majoritairement un solvant, généralement organique. Le type et la quantité de solvant conditionnent en partie les propriétés rhéologiques, la tension de surface et le comportement au séchage de l'encre minérale. Il est également possible d'ajouter un agent dispersant pour prévenir la floculation et/ou la sédimentation de la phase solide, ainsi qu'un agent tensioactif afin d'ajuster la tension de surface de l'encre minérale.

Les proportions massiques du solvant organique, de l'agent dispersant, de l'agent tensioactif et de la fritte de verre peuvent être ajustées de manière à ce que les propriétés de l'encre minérale soient adaptées au dispositif utilisé pour l'impression par jet d'encre. Le solvant organique peut généralement représenter 80% en poids du mélange de solvant organique, d'agent dispersant et d'agent tensioactif de l'encre minérale. Le type et la quantité de solvant organique peuvent être ajustés selon les contraintes techniques du dispositif d'impression par jet d'encre utilisé et les contraintes de production.

Pour former un émail à l'aide de l'encre minérale déposée par impression par jet d'encre, la température à laquelle l'encre minérale est séchée peut être comprise entre 25 et 180°C. La température du traitement thermique de cuisson du verre précurseur émaillé peut être égale ou supérieure à 650°C. De préférence, la température n'excède pas 1100°C.

Le solvant organique peut être un composé organique liquide à température ambiante ou un mélange de composés organiques liquides à température ambiante comprenant au moins un groupe fonctionnel alcool.

Le choix du composé organique comprenant un groupe fonctionnel alcool dépend de la méthode et/ou du dispositif utilisés pour l'impression par jet d'encre. Si le dépôt de l'encre minérale sur le substrat minéral est lent, il est avantageux d'utiliser un solvant ou un mélange de solvant avec une pression de vapeur saturante faible dans les conditions de pression et de température d'utilisation de la méthode et/ou du dispositif. En d'autres termes, dans les conditions de température et de pression standard, afin d'éviter que le solvant ou le mélange de solvants ne s'évapore trop rapidement, sa température d'ébullition peut être plus élevée.

Des exemples non limitatifs de solvant organique sont : le méthylène glycol, l'éthylène glycol, le propylène glycol, le butylène glycol, le méthanol, l'éthanol, le propanol, le butanol, les éthers de glycol tels que l'éther méthylique de propylène glycol ou l'éther méthylique du dipropylène glycol.

L'agent dispersant est, de préférence, un copolymère ou un mélange de copolymères comprenant au moins un groupe fonctionnel acide. L'agent dispersant permet de prévenir la floculation et/ou la sédimentation de la phase solide. Il représente de préférence 3 à 7%, au maximum 10%, en poids de la somme des pourcentages massiques du solvant organique, de l'agent dispersant et de l'agent tensioactif. Les sels d'alkylammonium d'un copolymère comprenant un ou plusieurs groupes fonctionnels acides sont des exemples non limitatifs d'agent dispersant.

L'agent tensioactif est de préférence un polyéther ou un mélange de polyéthers. Il représente de préférence 0,05% à 0,5% en poids de la somme des pourcentages massiques du solvant organique, de l'agent dispersant et de l'agent tensioactif.

L'encre minérale peut ne comprendre aucun pigment minéral colorant. Alternativement, elle peut comprendre un pigment minéral afin de procurer une teinte ou une couleur à l'émail. Le pigment minéral permet d'ajuster la couleur de l'encre minérale et de l'émail. Le pigment minéral peut être à base d'oxydes métalliques et/ou de métaux ou alliages métalliques susceptibles de s'oxyder lors du traitement thermique de l'encre minérale pour former l'émail. Des exemples non limitatifs de pigments minérales sont l'oxyde de titane, l'oxyde de cérium, l'oxyde de cobalt, l'oxyde de fer, l'oxyde de zirconium, l'oxyde manganèse, les spinels, ou encore les alumines dopées.

Dans un mode de réalisation, le D90 de la distribution granulométrique de la fraction solide de l'encre minérale est d'au plus 2 $\mu$m, de préférence compris entre 1 $\mu$m et 2 $\mu$m. Le D90 est calculé à partir de la distribution granulométrique déterminée par des méthodes de granulométrie laser selon la norme ISO 13320:2009. Il correspond à la taille des particules qui représentent 90% du volume total de particules du mélange. En d'autres termes, 90% du volume de particules du mélange de la fritte de verre et du pigment minéral est constitué de particules ayant une taille d'au plus 2 $\mu$m, de préférence comprise entre 1 et 2 $\mu$m. Dans mode avantageux de réalisation, la tension de surface de l'encre minérale est d'environ 26 mN/m à 25°C. Il a été constaté qu'une encre minérale présentant une tension de surface autour de 26mN/m à 25°C peut faciliter l'obtention d'un émail inorganique sur un substrat minéral conformément au premier aspect de l'invention.

Tous les modes de réalisation décrits, qu'ils concernent le premier aspect ou le deuxième aspect de l'invention, peuvent être combinés entre eux.

## Exemples

Dans quatre exemples E1, E2, E3 et E4 de substrats minéraux conformes à l'invention, trois émaux inorganiques différents, A, B et C sont déposés sur une plaque vitrocéramique KeraBlack+® (KB+) commercialisée par la société Eurokera S.N.C.

L'émail A est un émail de couleur noire comprenant 60-70% d'une fritte de verre F dont la composition est décrite dans la table 1, 15-20% d'oxyde mixte de cobalt et de silicium et 15-20% d'oxyde mixte de fer, chrome, cobalt et nickel.

L'email B est un émail gris foncé formé d'un mélange de 75% massique de l'émail A et de 25% massique d'un émail comprenant 70-75% d'une fritte de verre F dont la composition est décrite dans la table 1 et de 25-30% d'oxyde de titane.

L'émail C est émail gris formé d'un mélange de 50% massique d'émail A et de 50% d'un émail comprenant 70-75% d'une fritte de verre F dont la composition est décrite dans la table 1 et de 25-30% d'oxyde de titane.

[Tableaux1]

| Tab. 1 | Fraction massique (%) |
|---|---|
| $SiO_2$ | 35-50 |
| $Al_2O_3$ | 15-25 |
| $Li_2O$ | 1,5-4 |
| $B_2O_3$ | 22-32 |
| $Na_2O$ | 0-2 |
| $K_2O$ | 2-5 |
| CaO | 1-5 |
| $ZrO_2$ | 1-4 |

Dans les exemples E1, E2 et E3, les émaux inorganiques ont été élaborés selon une méthode conforme au deuxième aspect de l'invention, plus particulièrement par impression jet d'encre minérale avec un taux d'encrage, Te, de 55%. La fraction solide dans l'encre minérale est d'au plus 40% en poids. Le D90 de la distribution granulométrique de la fraction solide de l'encre minérale est d'environ 1,3-1,5 $\mu$m.

Dans l'exemple E4, l'émail inorganique a été déposé par une méthode sérigraphique non standard avec une pâte sérigraphique dont le D90 de la distribution granulométrique de sa fraction solide est d'environ 1,6 $\mu$m.

Dans un premier contre-exemple CE1 non conforme à l'invention, l'émail inorganique A est déposé par une méthode sérigraphique standard sur une plaque vitrocéramique KeraBlack+® (KB+) commercialisée par la société Eurokera S.N.C. Le D90 de la distribution granulométrique de la fraction solide de la pâte sérigraphique est d'environ 5,1 $\mu$m.

Dans un deuxième contre-exemple CE2 non conforme à l'invention, l'émail inorganique A est déposé par une méthode d'impression jet d'encre minérale sur une plaque vitrocéramique KeraBlack+® (KB+) commercialisée par la société Eurokera S.N.C avec un taux d'encrage, Te, de 40%. Le D90 de la distribution granulométrique de la fraction solide de l'encre minérale est d'environ 1,4 $\mu$m.

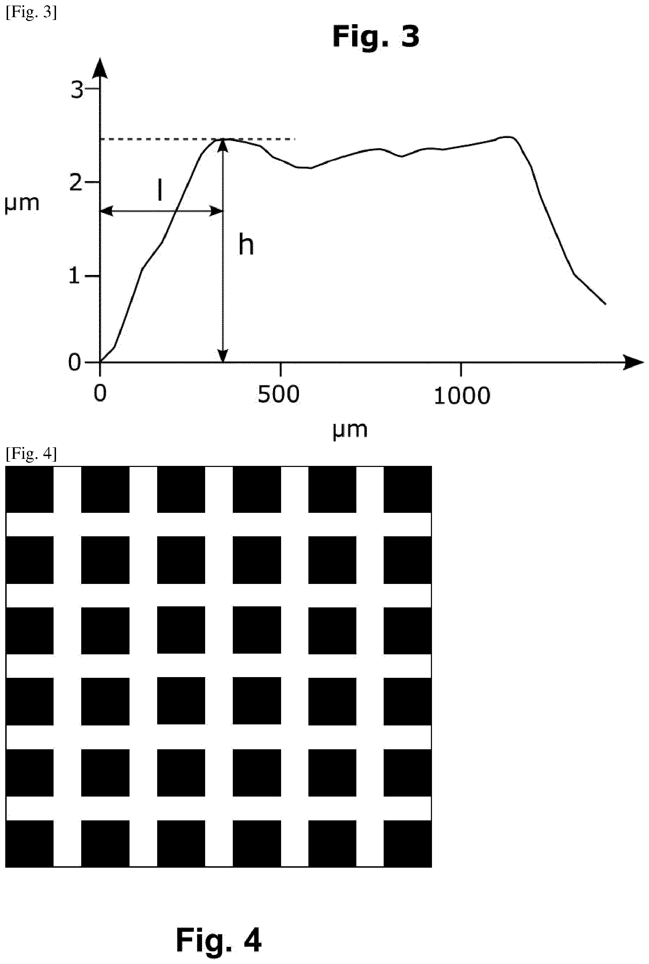

Dans les exemples E1, E4, et dans le contre-exemple CE1, les émaux sont déposés sous la forme d'un motif périodique de carrés d'environ 1,25mm de côté, d'une épaisseur, comprise entre 1 et 3 $\mu$m et espacés de 0,75mm, tel que schématiquement illustré sur la [Fig.4] Le taux de recouvrement de l'émail inorganique sur la surface du substrat est de 40%.

Dans les exemples E2 et E3 et le contre-exemple CE2, les émaux sont déposés sous la forme de motifs aléatoires avec un taux de recouvrement de l'émail sur le substrat est d'environ 25%.

Les caractéristiques des exemples E1, E2, E3 et E4 et des contre-exemples CE1 et CE2 sont résumées dans la table 2.

[Tableaux2]

| Tab. 2 | E1 | E2 | E3 | E4 | CE1 | CE2 |
|---|---|---|---|---|---|---|
| Substrat | KB+ | KB+ | KB+ | KB+ | KB+ | KB+ |
| Email | A | B | C | A | A | A |
| Méthode | Jet encre minérale | Jet encre minérale | Jet encre minérale | Sérigraphie | Sérigraphie | Jet d'encre minérale |
| Te | 55% | 55% | 55% | - | - | 40% |
| D90 | 1,3-1,5 $\mu$m | 1,3-1,5 $\mu$m | 1,3-1,5 $\mu$m | 1,6 $\mu$m | 5,1$\mu$m | 1,4$\mu$m |

La transmission lumineuse du substrat minéral seul, c'est-à-dire dépourvu d'email inorganique, a été mesurée à l'aide d'un spectrophotomètre Perkin Elmer Lambda 950 et conformément à la section 4.2 de la norme EN 410:1999 avec l'illuminant D65 et un observateur standard. La transmission lumineuse, Tl, mesurée du substrat minéral seul pour les exemples E1, E2, E3 et E4, et les contre-exemples CE1 et CE2, est d'environ 1,5%.

La luminance, notée L*, a été mesurée conformément à la norme ISO11664-4 à l'aide d'un spectrophotomètre BYK Gardner SPC008 avec un angle d'illumination de 45°et un angle d'observation à 0°.

La luminance du substrat minéral seul, notée L*(substrat), c'est-à-dire dépourvu d'émail inorganique, est mesurée en réflexion sur fond blanc, en l'occurrence un fond standard Chart 2810 fourni par BYK Gardner (L*=92,07 ; a* = -0,75 ; b* = 4,91).

La luminance de l'émail inorganique déposé sur le substrat minéral, notée L*(email/substrat), est mesurée en réflexion. La surface du substrat minéral est totalement recouverte par l'émail inorganique.

La différence relative de luminance $\Delta$L* est calculée à l'aide de l'équation suivante :

$$\Delta L^* = \left|\left(L^*(email/substrat) - L^*(substrat)\right)\right|$$

La rugosité totale, Rt, de surface de l'émail inorganique de chaque exemple E1, E2, E3 et E4, et des contre-exemples CE1 et CE2 a été mesurée à l'aide d'un palpeur mécanique Mitutoyo SJ-400 selon la section 4.1.5 de la norme ISO 4287:1997.

La pente topographique, Pt, de l'émail inorganique faisant saillie au niveau la surface du substrat vitrocéramique est calculée à l'aide d'un profil de surface. Le profil de surface est mesuré à l'aide d'un palpeur mécanique Mitutoyo SJ-400 muni d'un filtre PC75, non gaussien, appliqué sur le paramètre Wt.

Un exemple illustratif de mesure de profil de surface sur un émail inorganique en surface d'un substrat minéral conformément à l'invention est représenté sur la [Fig.3].

La mesure du profil est réalisée sur le bord de l'émail faisant saillie au niveau de la surface du substrat minéral sur une longueur de 15mm. L'émail a une forme géométrique polygonal. La pente topographique, correspondant à la tangente du dénivelé entre la surface du substrat minéral et la surface dite efficace de l'émail, est calculée à l'aide de la formule :

$$Pt = \frac{h}{l} \times 100$$

dans laquelle h est la différence de hauteur entre la surface du substrat minéral et la surface efficace de l'émail inorganique, et correspond généralement à l'épaisseur de l'émail par rapport à la surface du substrat minéral, et $l$ est la longueur du dénivelé.

Il est procédé, sur un même émail inorganique, à au moins trois mesures de pente topographique à différents lieux ou différentes localisations du bord de l'émail faisant saillie sur la surface du substrat minéral. Une valeur moyenne arithmétique, Ptm, de la pente topographique est calculée à partir de ces au moins trois mesures.

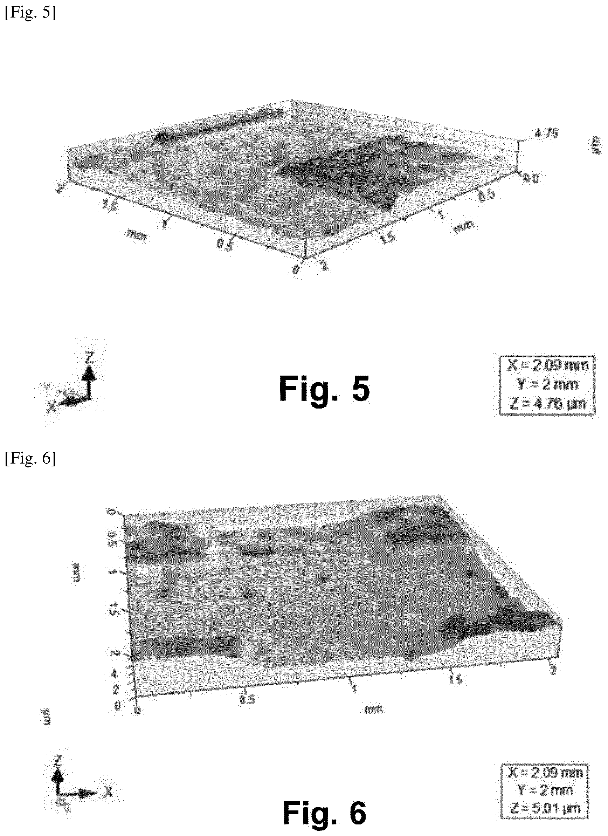

Les [Fig.5] et 6 sont des exemples de représentation 3D de profils topographiques mesurés à l'aide d'un profilomètre de surface 3D Taylor Hobson de la société AMETEK sur les exemples conformément à l'invention, et à partir desquels des mesures de profil de surface peuvent être réalisées.

L'évaluation de la visibilité des frottements métalliques a été réalisée à l'aide du protocole suivant. Une casserole en acier inoxydable, ci-après inox, ou en aluminium d'un diamètre de 20cm et d'un poids de 3kg est positionnée de manière inclinée sur le substrat minéral muni de l'émail inorganique, puis est déplacée à une vitesse d'environ 0,40m/s en 10 mouvements d'aller-retour. La casserole inox présente une dureté Vickers de 200HV.

Le niveau de marquage des frottements métalliques est évalué selon deux méthodes différentes : une méthode d'évaluation par analyse visuelle, et une méthode d'évaluation par analyse d'images.

Selon la première méthode d'analyse visuelle, la dégradation, D, de l'émail est évaluée visuellement selon une échelle de 0 à 5 à une distance de 60cm en condition normale d'observation. Le degré 5 correspond à une visibilité importante des particules métalliques incrustées et le degré 0 correspond à une absence visible de marques ou traces métalliques. En d'autres termes, plus le degré est faible, moins les traces ou les marques des frottements métalliques sont visibles à l'oeil nu.

Selon la deuxième méthode d'évaluation par analyse d'images, il est d'abord procédé à la prise d'une image photographique numérique d'une zone de taille définie de l'émail sous la lumière artificielle de diodes électroluminescentes 3 couleurs dans une boite à lumière adaptée à cet effet.

L'image photographique numérique fait ensuite l'objet d'un traitement numérique de conversion de l'image en niveaux de gris desquels une valeur moyenne du niveau de gris, Vm, est calculée.

Cette même opération a été réalisée pour une zone de l'émail ayant subi un frottement métallique et une zone de l'émail ayant subi aucun frottement métallique. La différence $\Delta Vm$ entre les valeurs Vm obtenues pour chacun de ces deux zones est calculée. Plus la valeur du paramètre $\Delta Vm$ est élevée, plus le nombre de particules métalliques incrustées dans l'émail est élevé.

Parallèlement, la même image photographique fait l'objet d'un traitement numérique de binarisation à partir duquel il est procédé au calcul d'un indice de visibilité, Iv, défini comme le rapport du nombre de pixels de plus forte intensité, c'est-à-dire de valeur 1, sur le nombre total de pixels. Plus ce rapport Iv est élevé, plus la visibilité des particules métalliques incrustées est élevée dans l'émail.

La taille de l'image est de 3264x2448 pixels pour une taille de zone d'analyse de l'émail comprise en 400000 et 450000 pixels. Cela correspond à environ 10x13 carrés du motif pour les exemples E1, E4 et le contre-exemple CE1.

Les coefficients de friction statique et dynamique, respectivement notés Fs et Fd, ont été mesurés selon les normes ASTM D1894, ISO 8295:1995 et ISO 15359:1999 sur un instrument AFT de mesure de coefficient de friction commercialisé par la société Hanatek Instruments ®. La tête de friction est une rondelle en acier inoxydable de 36mm de diamètre et de 2mm d'épaisseur NFE 25.513 de la société Berner ®. Les mesures ont été effectuées avec une vitesse de déplacement de la tête de friction de 500mm/min sur une longueur de course de 50mm.

Avant toute mesure de coefficient de friction, les échantillons sont préalablement nettoyés à l'aide d'un détergent Clin'Glass commercialisé par les Laboratoires Prodene Klint ®. Quatre mesures sont effectuées sur chaque échantillon et leur moyenne est calculée.

Pour ces mesures, l'émail inorganique à la surface du substrat présente un motif aléatoire pour les exemples E2 et E3 et le contre-exemple CE2, et un motif périodique de carrés d'environ 1,25mm de côté pour les exemples E1, E4 et pour le contre-exemple CE1.

L'ensemble des résultats sont regroupés dans la table 3. Les valeurs des paramètres D, $\Delta Vm$ et Iv sont reportés pour les frottements métalliques à l'aide d'une casserole en inox (inox) et en aluminium (alu) et sont respectivement annotés des mentions « inox » et « alu ».

[Tableaux3]

| Tab. 3 | E1 | E2 | E3 | E4 | CE1 | CE2 |
|---|---|---|---|---|---|---|
| E ($\mu$m) | 1,7 | 1,8 | 1,9 | 1,7 | 1,7 | 2,7 |
| Rt ($\mu$m) | 1,0 | 1,0 | 1,2 | 1,2 | 4 | 1,14 |
| Ptm (%) | 0,95 | 0,86 | 1,05 | 1,12 | 2,25 | 1,68 |
| D - inox | 1 | 0 | 0 | 3,5 | 5 | 1,5 |
| D - alu | 1 | 0 | 0 | 4 | 5 | 4 |

(suite)

| Tab. 3 | E1 | E2 | E3 | E4 | CE1 | CE2 |
|---|---|---|---|---|---|---|
| ΔVm - inox (UA) | 2,0 | 0 | 0 | 2,8 | 8,9 | 5,3 |
| ΔVm - alu (UA) | 2,0 | 0 | 0 | 3,8 | 8,0 | 4,3 |
| Iv - inox (%) | 1,03 | 0 | 0 | 1,05 | 6,34 | - |
| Iv - alu (%) | 0,55 | 0 | 0 | 2,23 | 7,03 | - |
| ΔL* | 13,3 | 31,0 | 45,0 | 8,8 | 7,2 | 12,3 |
| Fs | 0,23 | 0,13 | 0,19 | 0,20 | 0,52 | 0,16 |
| Fd | 0,17 | 0,10 | 0,14 | 0,17 | 0,51 | 0,11 |

Les résultats de la table 3 montre que le nombre, et donc la visibilité, des marques et traces métalliques est plus réduit pour les exemples E1, E2, E3 et E4 conformes à l'invention que pour les contre-exemples CE1 et CE2. En effet, quel que soit le paramètre, D, ΔVm et Iv, considéré pour des frottements à l'aide d'une casserole en inox (inox) ou en aluminium (alu), les valeurs sont plus faibles pour les exemples selon l'invention. La valeur des paramètres ΔVm et Iv diminuent de 75% à 92%, signifiant que la visibilité des marques et traces métalliques est réduite d'autant.

La comparaison des résultats de l'exemple E1 avec ceux de l'exemple E4 montre que les valeurs paramètres, D, ΔVm et Iv sont plus faibles lorsqu'une méthode de fabrication conforme au deuxième aspect de l'invention est utilisée. La méthode de fabrication selon l'invention permet donc d'obtenir de meilleures performances, en termes de diminution de la visibilité des marques et traces métalliques, qu'une méthode sérigraphique. L'utilisation d'une méthode sérigraphique reste néanmoins possible.

La comparaison des résultats des exemples E1, E2, et E3 montrent que la visibilité des traces et marques métalliques reste très réduite même pour des émaux inorganiques présentant un faible niveau de contraste avec le substrat minéral, en particulier d'aspect sombre avec un ΔL* inférieur à 35, notamment de couleur noire avec un ΔL* inférieur à 15.

A titre d'illustration supplémentaire des caractéristiques et des avantages de l'invention, plusieurs exemples issus l'état de la technique ont été reproduits sous la forme de contre-exemples dont les caractéristiques sont reportées dans la Table 4.

| Tab. 4 | Référence | Composition de l' émail | Motif | Taux de recouvrement |
|---|---|---|---|---|
| CE3 | EP 3067334 A1 | Farbe 1 Tabelle 3 ; Type A | Punkmuster 11 fig. 3 | 11% |
| CE4 | EP 3067334 A1 | Farbe 1a Tabelle 3 ; Type A | Punkmuster 11 fig. 3 | 11% |
| CE5 | EP 3067334 A1 | Farbe 6 Tabelle 3 ; Type A | Punkmuster 11 fig. 3 | 11% |
| CE6 | EP 3067334 A1 | Farbe 1 Tabelle 3 ; Type A | Punkmuster 12 fig. 3 | 44% |
| CE7 | EP 3067334 A1 | Farbe 1a Tabelle 3 ; Type A | Punkmuster 12 fig. 3 | 44% |
| CE8 | EP 3067334 A1 | Farbe 6 Tabelle 3 ; Type A | Punkmuster 12 fig. 3 | 44% |
| CE9 | FR 2 858 974 A1 EP 3067334 A1 | Pigment 2,7 % Tableau 4 ; fritte revendication 2 | Punkmuster 11 fig. 3 | 11% |
| CE10 | FR 2 858 974 A1 EP 3067334 A1 | Pigment 2,7 % Tableau 4 ; fritte revendication 2 | Punkmuster 12 fig. 3 | 44% |
| CE11 | WO 2019/219691 A1 | Exemple E1 | Identique à CE1 | 40% |
| CE12 | WO 2019/219691 A1 | Exemple E2 | Identique à CE1 | 40% |

Les contre-exemples CE3 -CE8 sont extraits de EP 3 067 334 A1 [SCHOTT AG [DE]] 14.09.2016. Les exemples CE3-CE5, d'une part, et les contre-exemples CE6-CE8, d'autre part, présentent respectivement trois compositions différentes d'émail (Farbe 1, Farbe 1a et Farbe 6). Ces deux séries de contre-exemples sont déposées selon deux motifs différents (Punkmuster 11 et Punkmuster 12).

Les contre-exemples CE7 et CE9 présentent la même composition d'émail extraite de FR 2 858 974 A1 [SCHOTT AG [DE]] 25.02.2005. A des fins de comparaison, ils sont déposés selon deux motifs différents (Punkmuster 11 et Punkmuster 12) extraits de EP 3 067 334 A1 [SCHOTT AG [DE]] 14.09.2016.

Les contre-exemples CE11 et CE12 présentent respectivement aux compositions des exemples E1 et E2 de WO 2019/219691 A1 [EUROKERA [FR]] 21.11.2019. A des fins de comparaison, ils sont déposés selon un motif de lignes d'une largeur de 0,6mm avec un taux de recouvrement de 55%.

Les émaux des contre-exemples CE3-CE12 peuvent présenter des compositions chimiques et/ou des tailles de particules du mélange, par exemple un mélange fritte de verre minéral et/ou pigment minéral, ayant servi à les former, similaires aux exemples E1-E4 selon l'invention.

Les émaux des exemples CE3-CE8 ont été déposés selon les méthodes décrites dans les documents dont ils sont extraits.

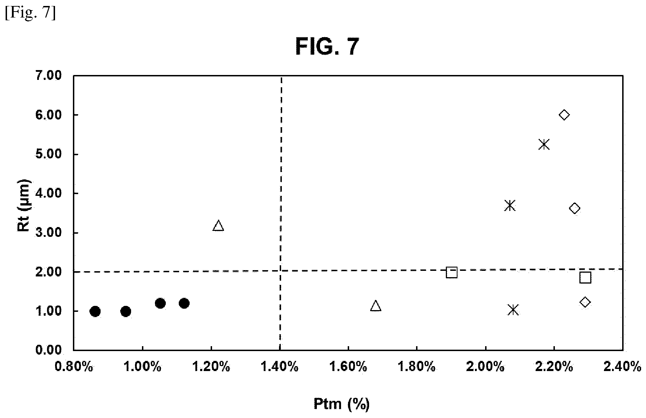

La rugosité totale et la pente topographique des contre-exemples CE1-CE3 ont été mesurées et/ou déterminés selon les mêmes méthodes que celles utilisées pour les exemples E1-E4 et les contre-exemple CE1 et CE2. Les résultats sont reportés dans la Table 5 représentés sur la [Fig.7].

| Tab. 5 | Rt ($\mu$m) | Ptm (%) | Symboles Fig. 7 |
|---|---|---|---|
| **CE3** | 6 | 2,23 | Losange vide |
| **CE4** | 3,62 | 2,26 | Losange vide |
| **CE5** | 1,22 | 2,29 | Losange vide |
| **CE6** | 5,25 | 2,17 | Etoile |
| **CE7** | 3,69 | 2,07 | Etoile |
| **CE8** | 1,03 | 2,08 | Etoile |
| **CE9** | 1,99 | 1,90 | Carré vide |
| **CE10** | 1,86 | 2,29 | Carré vide |
| **CE11** | 3,2 | 1,22 | Triangle vide |
| **CE12** | 1,14 | 1,68 | Triangle vide |

Sur la [Fig.7], les exemples E1 à E4 selon l'invention sont représentés pas des symboles ronds pleins, les contre-exemples CE3-CE5 par des losanges vides, les contre-exemples CE6-CE8 par des étoiles, les contre-exemple CE9-CE10 par des carrés vides et les contre-exemple CE11 et CE12 par des triangles vides. Comme guides pour les yeux, les valeurs de rugosité totale, Rt, à 2,00 $\mu$m et de pente topographique, Ptm, à 1,40% sont respectivement représentées par une ligne verticale en tirets et une ligne horizontale en tirets.

La [Fig.7] montre que seuls les exemples selon l'invention sont situés dans la zone définie sous la ligne horizontale et à droite de la ligne verticale. Les contre-exemples CE3-CE12 sont tous en dehors de cette zone. Cette figure montre donc clairement et sans ambiguïté que seuls les exemples selon l'invention possèdent les valeurs de rugosité totale, Rt, et de pente topographique, Ptm, respectivement inférieures ou égales à 2,00 $\mu$m et inférieures ou égales à 1,4%.

## Revendications

1. Substrat minéral (1001) comprenant sur au moins une de ses surfaces un émail inorganique (1002) formant un motif, **caractérisé en ce que** :

   - ledit émail inorganique (1002) présente une valeur de rugosité totale, Rt, de surface (1002-S) inférieure ou égale à 2 $\mu$m, et
   - le bord (1002a, 1002b) dudit émail inorganique (1002) faisant saillie au niveau la surface (1001-S) du substrat minéral (1001) présente une valeur de pente topographique, exprimée en pourcentage, inférieure ou égale à 1,4%.

2. Substrat minéral (1001) selon la revendication 1, tel que la valeur de ladite rugosité totale de surface est inférieure ou égale à 1,5 $\mu$m, de préférence inférieure ou égale à 1 $\mu$m.

3. Substrat minéral (1001) selon l'une quelconque des revendications 1 à 2, tel que la valeur de ladite pente topographique est inférieure ou égale à 1,2%.

4. Substrat minéral (1001) selon l'une quelconque des revendications 1 à 3, tel que l'épaisseur de l'émail inorganique (1002) est comprise entre 1,5$\mu$m et 3,5$\mu$m, voire entre 1,5$\mu$m et 2 $\mu$m.

5. Substrat minéral (1001) selon l'une des revendications 1 à 4, tel que la différence relative de luminance $\Delta$L*, définie comme la différence entre la luminance L*(email/substrat), mesurée en réflexion, de l'émail inorganique (1002) sur le substrat minéral (1001) et de la luminance L*(substrat), mesurée en réflexion, du substrat minéral (1001) dépourvu d'émail inorganique (1002), est d'au plus 50, de préférence d'au plus 35.

6. Substrat minéral (1001) selon l'une quelconque des revendications 1 à 5, tel que la luminance L*(substrat), mesurée en transmission, dudit substrat minéral est inférieure ou égale à 5.

7. Substrat minéral (1001) selon l'une des revendications 1 à 6, tel que la transmission lumineuse du substrat minéral est d'au plus 17%, de préférence d'au plus 10%, voire d'au plus 5%.

8. Substrat minéral (1001) selon l'une des quelconques revendications 1 à 7, tel que le coefficient de friction statique et/ou dynamique de la surface dudit substrat minéral (1001) munie dudit émail inorganique (1002) est d'au plus 0,30, de préférence d'au plus 0,25.

9. Substrat minéral selon l'une des revendications 1 à 8, tel que le substrat minéral est un substrat vitrocéramique ou un substrat en verre minéral.

10. Méthode de fabrication d'un substrat minéral (1001) selon l'une quelconque des revendications 1 à 9, ladite méthode comprenant une étape de dépôt d'un émail inorganique (1002) par impression jet d'encre minérale sur un substrat minéral (1001) dans laquelle le taux d'encrage est d'au moins 45% et d'au plus 85%, et le pourcentage massique de la fraction solide dans l'encre minérale utilisée pour l'impression jet d'encre est d'au plus 40% de ladite encre minérale.

11. Méthode de fabrication selon la revendication 10, tel que la tension de surface de l'encre minérale est d'environ 26 mN/m à 25°C.

12. Utilisation d'un substrat minéral (1001) selon l'une quelconque des revendications 1 à 9 comme surface d'un dispositif de cuisson ou d'un plan de travail.


**Patentansprüche**

1. Mineralsubstrat (1001), umfassend auf mindestens einer seiner Oberflächen ein anorganisches Email (1002), das ein Muster ausbildet,
**dadurch gekennzeichnet, dass:**

   - das anorganische Email (1002) einen Gesamtrauheitswert, Rt, der Oberfläche (1002-S) von kleiner als oder gleich 2 $\mu$m aufweist, und
   - die Kante (1002a, 1002b) des anorganischen Emails (1002), die im Bereich der Oberfläche (1001-S) des Mineralsubstrats (1001) hervorsteht, einen Wert einer topografischen Neigung, ausgedrückt in Prozent, von kleiner als oder gleich 1,4 % aufweist.

2. Mineralsubstrat (1001) nach Anspruch 1, wobei der Gesamtrauheitswert der Oberfläche kleiner als oder gleich 1,5 $\mu$m, bevorzugt kleiner als oder gleich 1 $\mu$m, ist.

3. Mineralsubstrat (1001) nach einem der Ansprüche 1 bis 2, wobei der Wert der topografischen Neigung kleiner als oder gleich 1,2 % ist.

4. Mineralsubstrat (1001) nach einem der Ansprüche 1 bis 3, wobei die Dicke des anorganischen Emails (1002) zwischen 1,5 $\mu$m und 3,5 $\mu$m oder sogar zwischen 1,5 $\mu$m und 2 $\mu$m liegt.

5. Mineralsubstrat (1001) nach einem der Ansprüche 1 bis 4, wobei die relative Leuchtdichtedifferenz ∆L*, definiert als die Differenz zwischen der Leuchtdichte L*(Email/Substrat), gemessen in Reflexion, des anorganischen Emails (1002) auf dem Mineralsubstrat (1001) und der Leuchtdichte L*(Substrat), gemessen in Reflexion, des Mineralsubstrats (1001) ohne anorganisches Email (1002), höchstens 50, bevorzugt höchstens 35 beträgt.

6. Mineralsubstrat (1001) nach einem der Ansprüche 1 bis 5, wobei die Leuchtdichte L*(Substrat), gemessen in Transmission, des Mineralsubstrats kleiner als oder gleich 5 ist.

7. Mineralsubstrat (1001) nach einem der Ansprüche 1 bis 6, wobei die Lichtdurchlässigkeit des Mineralsubstrats höchstens 17 %, bevorzugt höchstens 10 % oder sogar höchstens 5 % beträgt.

8. Mineralsubstrat (1001) nach einem der Ansprüche 1 bis 7, wobei der statische und/oder dynamische Reibungskoeffizient der Oberfläche des Mineralsubstrats (1001), die mit dem anorganischen Email (1002) versehen ist, höchstens 0,30, bevorzugt höchstens 0,25, beträgt.

9. Mineralsubstrat nach einem der Ansprüche 1 bis 8, wobei das Mineralsubstrat ein Glaskeramiksubstrat oder ein Mineralglassubstrat ist.

10. Verfahren zum Herstellen eines Mineralsubstrats (1001) nach einem der Ansprüche 1 bis 9, das Verfahren umfassend einen Schritt einer Auftragung eines anorganischen Emails (1002) durch Mineraltintenstrahldruck auf ein Mineralsubstrat (1001), wobei die Farbdeckung mindestens 45 % und höchstens 85 % beträgt und der Massenprozentsatz des festen Anteils in der für den Tintenstrahldruck verwendeten Mineraltinte höchstens 40 % der Mineraltinte beträgt.

11. Herstellungsverfahren nach Anspruch 10, wobei die Oberflächenspannung der Mineraltinte etwa 26 mN/m bei 25 °C beträgt.

12. Verwendung eines Mineralsubstrats (1001) nach einem der Ansprüche 1 bis 9 als Oberfläche einer Kochvorrichtung oder einer Arbeitsfläche.

**Claims**

1. A mineral substrate (1001) comprising, on at least one of its surfaces, an inorganic enamel (1002) forming a pattern, **characterized in that:**

   - said inorganic enamel (1002) has a total roughness, Rt, of its surface (1002-S) of less than or equal to 2 μm, and
   - the edge (1002a, 1002b) of said inorganic enamel (1002) protruding from the surface (1001-S) of the mineral substrate (1001) has a topographic slope value, expressed as a percentage, of less than or equal to 1.4%.

2. The mineral substrate (1001) according to claim 1, such that the value of the total surface roughness is less than or equal to 1.5 μ m, preferably less than or equal to 1 μm.

3. The mineral substrate (1001) according to any one of claims 1 to 2, such that the value of said topographic slope is less than or equal to 1.2%.

4. The mineral substrate (1001) according to any one of claims 1 to 3, such that the thickness of the inorganic enamel (1002) is between 1.5 μm and 3.5 μm, or between 1.5 μm and 2 μm.

5. The mineral substrate (1001) according to one of claims 1 to 4, such that the relative luminance difference ∆L*, defined as the difference between the luminance L*(enamel/substrate), measured in reflection, of the inorganic enamel (1002) on the mineral substrate (1001) and the luminance L*(substrate), measured in reflection, of the mineral substrate (1001) without the inorganic enamel (1002), is at most 50, preferably at most 35.

6. The mineral substrate (1001) according to any one of claims 1 to 5, such that the luminance L*(substrate), measured in transmission, of said mineral substrate is less than or equal to 5.

7. The mineral substrate (1001) according to one of claims 1 to 6, such that the light transmission of the mineral substrate is at most 17%, preferably at most 10%, or at most 5%.

8.  The mineral substrate (1001) according to any one of claims 1 to 7, such that the static and/or dynamic coefficient of friction of the surface of said mineral substrate (1001) provided with the inorganic enamel (1002) is at most 0.30, preferably at most 0.25.

9.  The mineral substrate according to one of claims 1 to 8, such that the mineral substrate is a glass-ceramic substrate or a mineral glass substrate.

10. A method for producing a mineral substrate (1001) according to any one of claims 1 to 9, said method comprising a step of depositing an inorganic enamel (1002) by inkjet printing mineral ink onto a mineral substrate (1001), wherein the inking rate is at least 45% and at most 85%, and the weight percentage of the solid fraction in the mineral ink used for the inkjet printing is at most 40% of said mineral ink.

11. The production method according to claim 10, such that the surface tension of the mineral ink is approximately 26 mN/m at 25°C.

12. A use of a mineral substrate (1001) according to any one of claims 1 to 9 as a surface of a cooking device or worktop.

[Fig. 1]

**Fig. 1**

[Fig. 2]

**Fig. 2**

[Fig. 3]

# Fig. 3

[Fig. 4]

# Fig. 4

[Fig. 5]

**Fig. 5**

X = 2.09 mm
Y = 2 mm
Z = 4.76 µm

[Fig. 6]

**Fig. 6**

X = 2.09 mm
Y = 2 mm
Z = 5.01 µm

[Fig. 7]

FIG. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2858974 A1
- WO 2016008848 A1
- WO 2016110724 A1
- EP 3067334 A1
- WO 2019219691 A1